Europäisches Patentamt

European Patent Office

Office européen des brevets

(11) Veröffentlichungsnummer: **0 508 317 A1**

## (12) EUROPÄISCHE PATENTANMELDUNG

(21) Anmeldenummer: **92105773.3**

(22) Anmeldetag: **03.04.92**

(51) Int. Cl.⁵: **F16C 29/04**, F16C 29/06, F16C 29/00

(30) Priorität: **09.04.91 DE 4111544**

(43) Veröffentlichungstag der Anmeldung:
**14.10.92 Patentblatt 92/42**

(84) Benannte Vertragsstaaten:
**PT**

(71) Anmelder: **HANS WORM GMBH & CO. KG**
**Höher Strasse 10**
**W-5650 Solingen 1(DE)**

(72) Erfinder: **Worm, Peter**
**Börsenstrasse 103 c**
**W-5650 Solingen(DE)**

(74) Vertreter: **Vomberg, Friedhelm, Dipl.-Phys.**
**Schulstrasse 8**
**W-5650 Solingen 1(DE)**

(54) **Kugelführung.**

㊼ Die Erfindung betrifft eine Kugelführung mit einem mindestens eine zum Abrollen der Kugeln (12) angepaßte nutförmige Laufrille aufweisenden Basiskörper (17) mit mindestens einem Kugelführungsgehäuse (13). Insbesondere zur Schaffung einer korrosionsbeständigen Oberfläche wird vorgeschlagen, daß der Basiskörper (17) und/oder das Kugelführungsgehäuse (13) zumindest teilweise pulverlackbeschichtet ist.

Kugelführungen dieser Art weisen einen überraschend ruhigen, geräuschgeminderten Lauf auf.

FIG. 4 a

Die Erfindung betrifft eine Kugelführung mit einem mindestens eine zum Abrollen der Kugeln angepaßte nutförmige Laufrille aufweisenden Basiskörper und mit mindestens einem Kugelführungsgehäuse.

Nach dem Stand der Technik sind Kugelführungen für unbegrenzte und begrenzte Schiebewege bekannt, die die geradlinige Bewegung von Maschinenteilen erlauben, wie z.B. von Schlitten an Werkzeugmaschinen. Der besondere Vorteil der Kugelführungen besteht in ihrer geringen Reibung und ihrem niedrigen Verschleiß, dazu bieten sie eine hohe Führungsgenauigkeit durch geringes Spiel, vielfach auch Nachstellmöglichkeiten des Führungsspieles. Die Kugelführung stellt einen Sonderfall der Wälzlager dar, demgegenüber sie den Vorteil hat, daß auch bei geringen Winkelabweichungen der Auflageflächen einer Schienenlaufrille die linienförmige Berührung zu den Kugeln noch nicht aufhebt, was sich verschleißmindernd auswirkt.

So sind beispielsweise Kugelführungen für begrenzte Schiebewege bekannt, wobei die Kugelführung aus einer inneren Welle, dem Kugelkäfig mit den Kugeln und dem äußeren Rohr besteht. Die Kugel wälzen sich auf der Wellnut und der Innenoberfläche des äußeren Rohres ab, wobei das Käfigrohr stets den halben Weg der gewünschten ganzen Schiebelänge zurücklegt. Die innere Welle besitzt mehrere, gleichmäßig über den Umfang verteilte, in Achsrichtung geschliffene Laufrillen für die Kugeln, wobei die Laufrillen den Kugeln eine linienförmige Berührung bieten und eine hohe Belastbarkeit der Führung gewährleisten.

Ebenso zum Stand der Technik gehören Kugelumlaufschuhe für unbegrenzte Schiebewege, wobei um ein Innensegment angeordnete Kugeln mit einem Gehäuse umschlossen sind, das an der Längsseite geöffnet ist, wobei die Kugeln am Herausfallen durch eine mit dem Gehäuse verbundenen Steg gehindert werden. Das Innensegment kann in besonderen Ausführungsformen durch einen Einstellexzenter oder mittels Einstellschrauben eingestellt werden, so daß sich die Kugeln beispielsweise in einer nutförmigen Laufrille einer Schiene als Basiskörper abwälzen können. Soweit kein Einstellexzenter vorgesehen ist, kann das Spiel der Kugeln durch den Abstand des Kugelführungsgehäuses von der Laufschiene eingestellt werden. Dies wird auch bei sogenannten Doppel-Kugelführungsumlaufschuhen ausgenutzt, bei dem der Kugelumlauf an beiden Längsseiten ein- und ausgleitet, wo das Gehäuse entsprechend geöffnet ist.

Zu den bei der Erfindung angesprochenen Kugelführungen zählen auch solche Konstruktionen, bei denen der Kugelumlauf durch Stege in zwei Rohrumlenkbögen eingeleitet wird, die mit einem geraden Rohrstück verbunden sind. Die Führung für beide Kugelumläufe bilden zwei Führungsrillen, vorzugsweise prismenartig ausgestaltete Führungsrillen, an einer Laufschiene.

Bekannt sind auch sogenannte Transfertische, die mit mindestens zwei Kugelumlaufschuhen lösbar verbunden sind, deren Kugeln in jeweils einer Laufrille einer Laufschiene abrollen. In entsprechender Weise lassen sich durch vertikal zueinander angeordneten Laufschienen auch Transfertische in Form von Kreuztischen schaffen, mit denen die Einstellung jeder gewünschten Lage in einer vorgebenen Ebene möglich ist.

Als Material für die genannten Basiskörper, nämlich Laufschienen und Wellen, sowie Kugelführungsgehäuse als auch die Tische werden regelmäßig durchhärtbare Stähle, z.B. Chrom-Stähle oder Chrom-Molybdänstähle oder auch Aluminium bzw. Messing verwendet.

Im Betrieb sind die genannten Werkstoffe häufig einer korrodierenden Atmosphäre ausgesetzt, weshalb schon vorgeschlagen worden ist, die Oberflächen mit einem Überzugsmetall, beispielsweise Zink, Nickel, Chrom, Kupfer oder Zinn, zu versehen. Diese Überzüge haben jedoch den Nachteil hoher Herstellungskosten bei nur eingeschränktem Korrosionsschutz, ferner ist beispielsweise Nickel als toxischer Werkstoff bekannt, der Lebensmittelunverträglich ist und beim Bedienungspersonal bei Kontakten vielfach zu allergischen Reaktionen führt.

Es ist daher Aufgabe der vorliegenden Erfindung, die eingangs genannten Kugelführungen dahingehend zu verbessern, daß auf umweltbelastende Überzugsstoffe verzichtet wird, aber dennoch ein hinreichender Korrosionsschutz besteht und vorzugsweise ein ruhiger Lauf der Kugelführungen erhalten bleibt.

Diese Aufgabe wird durch die im Anspruch 1 angegebene Kugelführung gelöst, deren kennzeichnendes neues Merkmal darin besteht, daß der Basiskörper und/oder das Kugelführungsgehäuse zumindest teilweise pulverlackbeschichtet ist. Weiterentwicklungen der Erfindung, insbesondere konkrete Anwendungsbeispiele sowie eine besondere Auswahl der Pulverlacke werden in den Unteransprüchen beschrieben.

Der besondere Vorteil der Pulverlackbeschichtung besteht insbesondere in seiner Korrosionsbeständigkeit, z.B. gegen Säuren, Laugen oder andere chemisch aggressive Stoffe, die zum Teil auch in Schmiermitteln enthalten sind. Die insbesondere in den Ansprüchen 9 bis 12 beschriebenen Pulverlackbeschichtungen, die sich als hinreichend hart und verschleißfest neben ihrer Korrosionsbeständigkeit erwiesen haben. Überraschenderweise führt die Kunststoffbeschichtung auch zu einer Dämpfung der bisher als nachteilig feststellbaren Schwingungen, d.h. eine höhere Laufruhe der Kugelführungen ist erzielbar. Beschichtet werden vorzugsweise alle Flächen, die der Außenatmosphäre ausgesetzt sind, d.h., insbesondere können solche Flächen ausgenommen werden, die im Einbauzustand fest verschraubt an anderen Flächen liegen und bei denen kein Stoff zwischen die Flächen eindringen kann. Grundsätzlich hat es sich auch als möglich erwiesen, die nutförmigen Laufrillen mit einer Pulverlackbeschichtung zu versehen, so daß Kugelführungen erhalten werden, die im Lebensmittelbereich gefahrlos einsetzbar sind. Nur bei extrem hohen Belastungen zwischen den Kugeln und den Kugelführungsrillen bleibt die Laufrille unbeschichtet.

Ein weiterer Vorteil einer Pulverlackbeschichtung liegt darin, daß praktisch alle RAL-Farben auflackiert werden können und somit jeweilige Bauteile farblich kenntlich gemacht werden können, etwa um eine gegenseitige Zuordnung zu erleichtern.

In einem speziellen Ausführungsbeispiel ist der Basiskörper eine Laufschiene, deren mindestens eine lange schmale Seitenfläche eine Laufrille, vorzugsweise oberflächengehärtete Prismenlaufrille, aufweist, wobei die großflächigen Ober- und Unterseiten der Laufschiene sowie ggf. die Stirnseiten, soweit hieran keine Anschläge oder ähnliches befestigt sind, pulverlackbeschichtet sind.

Ebenso werden vorzugsweise Kugelumlaufschuh-Gehäuse einschließlich ihres Steges pulverlackbeschichtet.

Aus den genannten Teilen lassen sich in Verbindung mit einem Tisch, der mit mindestens zwei Kugelumlaufschuhen beispielsweise durch eine Verschraubung lösbar verbunden ist, sogenannte Transfertischanordnungen zusammensetzen, bei denen der Tisch über die Kugelumlaufschuhe entlang der Längsachse der Laufschiene verschiebbar ist. Soweit der genannte Tisch nicht an anderen Maschinenteilen angeschraubt ist, werden dessen freiliegende Flächen ebenfalls pulverlackbeschichtet.

Für begrenzte Schiebewege sind auch Kugelführungen bekannt, deren Basiskörper eine Welle ist, die an ihrer Mantelfläche mehrere Laufrillen aufweist, in denen die in einem Kugelkäfig angeordneten Kugeln zwischen der genannten inneren Welle und der Innenoberfläche eines äußeren Rohres als Kugelführungsgehäuse abrollen. Die innere Welle sowie das äußere Rohr werden ebenfalls pulverlackbeschichtet, soweit diese Teile nicht über eine Preß- oder Schraubverbindung reibschlüssig an anderen Teilen liegen. So kann beispielsweise das äußere Rohr als Träger eines Bockes dienen, der vorzugsweise ebenfalls pulverlackbeschichtet ist.

Soweit nach dem Stand der Technik Abstreifer verwendet werden, werden diese ebenfalls pulverlackbeschichtet.

Die Auswahl des Pulverlackes richtet sich im wesentlichen nach der geforderten Härte und Abriebfestigkeit, so daß vorzugsweise ein Duroplast auf der Basis Epoxy, Epoxy-Polyester- und Acrylatharz ist.

Um einen gleichmäßig dicken Auftrag zu erhalten, wird der Pulverlack vorzugsweise mittels des prinzipiell nach dem Stand der Technik bekannten elektrostatischen Pulverbeschichtens aufgetragen. Hierbei wandern die Pulverteilchen unter dem Einfluß des elektrischen Feldes zum geerdeten Werkstück und setzen sich dort ab. Das aufgebrachte Pulver wird bei Temperaturen zwischen 160°C und 220°C, vorzugsweise mit einer Dicke zwischen 30 bis 300 $\mu$m bzw. 50 bis 100 $\mu$m aufgetragen und dann in Umluft-Kammeröfen oder Durchlauföfen auf dem Werkstück eingebrannt. Aus fertigungstechnischen Gründen sollte die Einbrennzeit maximal 10 Minuten betragen.

Ausführungsbeispiele der Erfindung sind in den Zeichnungen dargestellt. Es zeigen

| | |
|---|---|
| Fig. 1a bis c | einen Kugelumlaufschuh mit einer Öffnung an einer Längsseite in verschiedenen Ansichten, |
| Fig. 2a bis c | einen Kugelumlaufschuh mit jeweiligen Öffnungen an den Längsseiten, ebenfalls in zwei Ansichten, |
| Fig. 3a, b | eine Prismenlaufschiene in zwei Ansichten, |
| Fig. 4a, b | eine Transfertischanordnung in zwei Ansichten, |
| Fig. 5a, b | ein Einbaubeispiel für zwei Kugelumlaufschuhe unter Vorspannung gegen eine Prismenlaufschiene, |
| Fig. 6a, b | ein weiteres Einbaubeispiel unter Verwendung zweier Kugelumlaufschuhe nach |
| Fig. 7 | eine Kugelführung für begrenzte Schiebewege mit einer inneren Welle, |
| Fig. 8a, b | eine Kugelführung gemäß Fig. 7 mit einem Einfachlagerbock, |
| Fig. 9a, b | einen Doppellagerbock unter Verwendung von zwei Kugelführungen gemäß Fig. 7 und |
| Fig. 10a, b | eine Kugelführung auf einer runden Welle unter Verwendung mehrerer Kugelumlaufschuhe gemäß Fig. 1, die in einem geschlossenen Gußgehäuse angeordnet sind. |

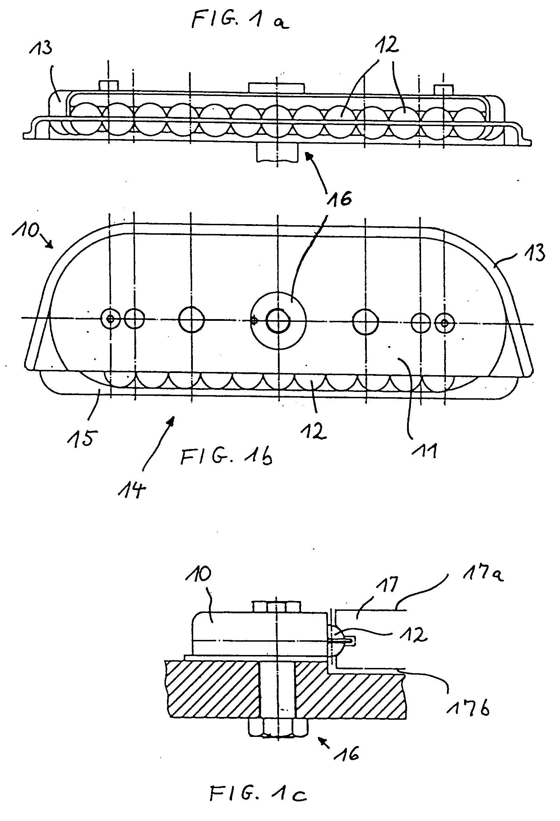

Der in Fig. 1a, b dargestellte Kugelumlaufschuh 10 besitzt ein Innensegment 11, worum Kugeln 12 angeordnet sind, die mit einem Gehäuse 13 umschlossen werden. Dieses Gehäuse 13 ist an der Längsseite 14 geöffnet, wobei die Kugeln 12 am Herausfallen durch einen mit dem Gehäuse verbundenen Steg 15 gehindert werden. Das Innensegment 11 kann durch den Einstellexzenter 16 gegen eine Prismenschiene 17 (siehe Fig. 1c) mit der gewünschten Genauigkeit eingestellt werden. Der Kugelumlaufschuh oder die Prismenschiene 17 kann sich nun über die sich abwälzenden Kugeln 12 unbegrenzt in der Länge bewegen. Das Gehäuse 13 einschließlich Stege 15 sowie die Ober- und Unterseite 17a, b der Prismenschiene 17 sind mit einer Pulverlackschicht überzogen.

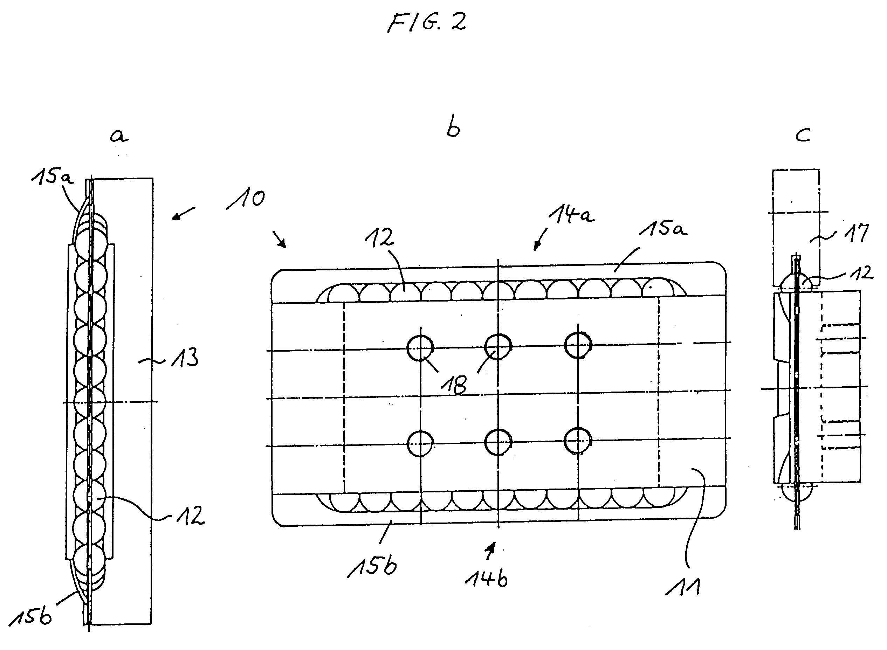

Fig. 2 zeigt den betreffenden Umlaufschuh 10 in einer Ausführungsform, bei der jeweils beide Längsseiten 14a und 14b offen sind, so daß von beiden Längsseiten die Kugeln 12 von außen zugänglich sind und jeweils durch einen Steg 15a, b gegen Herausfallen gehaltert werden. Fig. 2c zeigt die Anlage einer Kugelreihe 12 an einer Prismenlaufschiene 17, die auch zur Einstellung statt des in Fig. 1a bis c vorgesehenen Exzenters dient. Selbstverständlich besitzt der Kugelumlaufschuh Festhalteschrauben 18. Das Gehäuse 13, die Stege 15a, b und die Prismenlaufschiene 17 sind vollflächig mit Pulverlack überzogen.

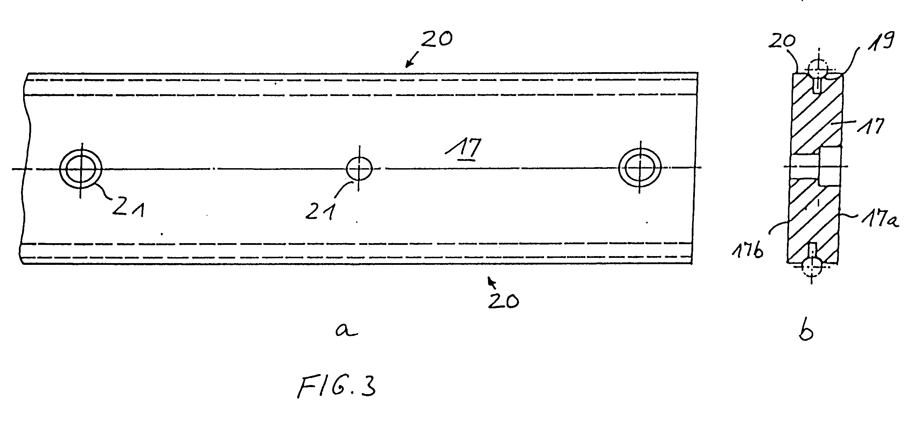

Fig. 3 zeigt eine doppelseitig geschliffene Prismenlaufschiene 17, deren nutförmige Laufrillen 19 jeweils an den schmalen Längsseiten 20 eingeschliffen sind. Die Prismenlaufschiene 17 enthält eine oder mehrere Bohrungen 21 - je nach Bedarf zum Befestigen weiterer nicht dargestellter Bauteile und ist an ihren Flächen 17a, b mit einer Pulverlackschicht überzogen.

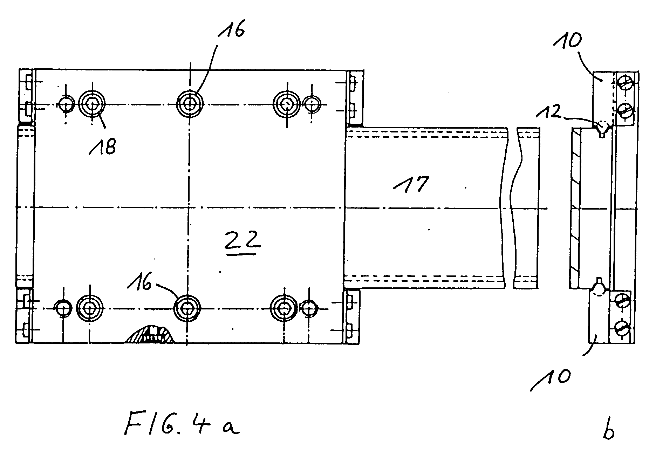

Die in Fig. 4a und b dargestellte Transfertischanordnung setzt sich im wesentlichen aus einem Tisch 22 und hieran befestigten Kugelumlaufschuhen 10 zusammen, die entlang der Längsachse einer pulverlackbeschichteten Prismenlaufschiene 17 zusammen mit dem Tisch 22 linear bewegbar sind. Die Vorspannung bzw. der Anpreßdruck der Kugeln 12 kann, wie dargelegt, über die Einstellexzenter 16 vorgenommen werden.

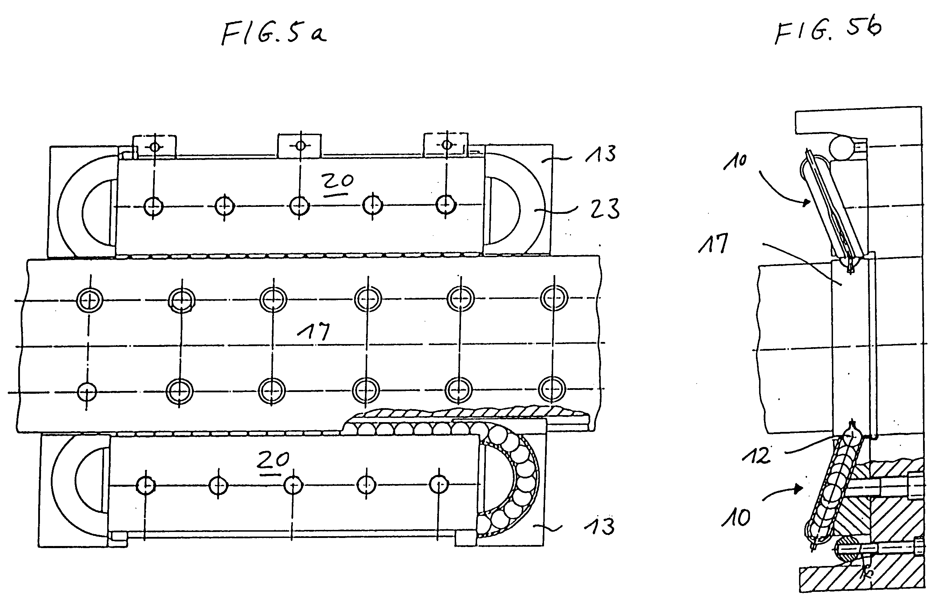

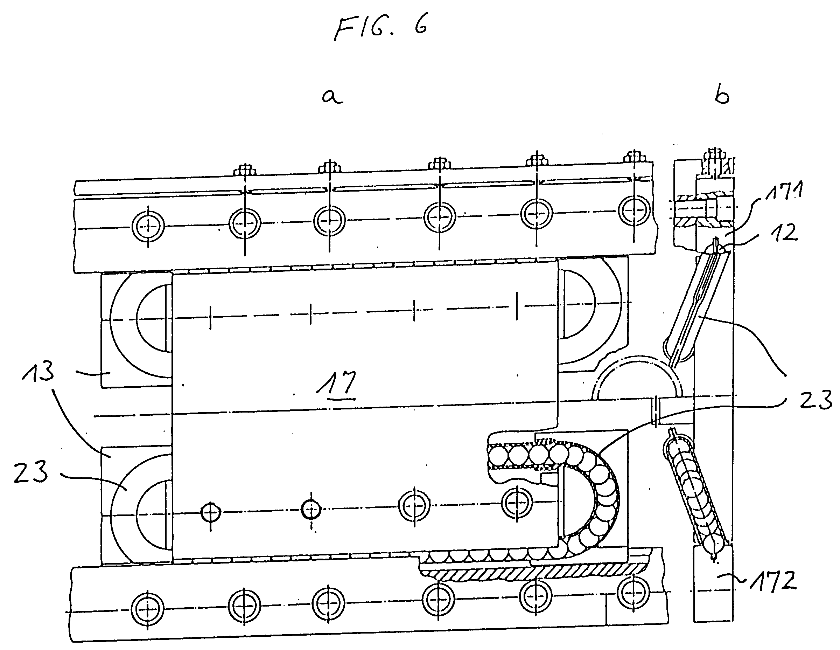

Fig. 5a, b, 6a und 6b zeigen jeweils Kugelumlaufschuhe 20, bei denen der Kugelumlauf durch Stege in zwei Rohrumlenkbögen 23 eingeleitet wird, die mit einem geraden Rohrstück verbunden sind.

Wie insbesondere aus Fig. 5b und 6b ersichtlich, sind die Kugelumlaufschuhe derart schräg angeordnet, daß die an einer Längsseite freiliegenden Kugeln in den Laufrillen 19 einer mittig angeordneten Prismenlaufschiene 17 anliegen. An den jeweils gegenüberliegenden Seiten sind weitere entsprechend eingespannte Laufschienen 171 und 172 vorgesehen (Fig. 6b).

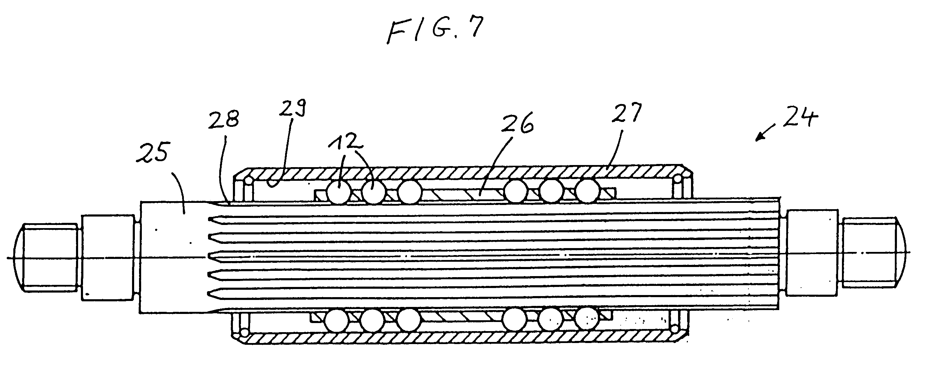

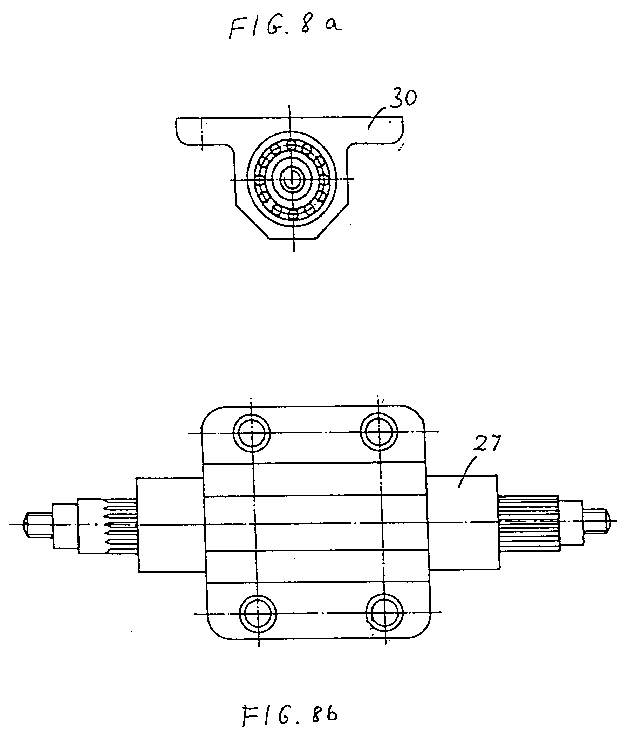

Fig. 7 zeigt eine Kugelführung für einen begrenzten Schiebeweg. Diese Kugelführung 24 besteht aus einer inneren Welle 25, dem Kugelkäfig 26 mit den Kugeln 12 und dem äußeren Rohr 27. Die Kugeln 12 wälzen sich auf der Wellnut 28 und der Innenoberfläche 29 des äußeren Rohres 27 ab. Hierbei legt das Rohr 27 immer den halben Weg der gewünschten ganzen Schiebelänge zurück. Die innere Welle besitzt zwölf gleichmäßig über den Umfang verteilte, in Achsrichtung geschliffene Laufrillen 28 für die Kugeln. Der Kugelkäfig 26, der auch aus Kunststoff sein kann, hält an beiden Enden je drei Reihen Kugeln 12, so daß sich also sechs Kugeln in jeder Laufrille abwälzen (insgesamt 72 Kugeln 12). Die innere Welle wie das äußere Rohr besitzen eine Härte RC 60 bis 62 und sind pulverlackbeschichtet. Ein Einbaubeispiel für die Kugelführung gemäß Fig. 7 zeigen Fig. 8a und b. Hierbei dient das äußere Rohr 27 als Träger für einen ebenfalls pulverlackbeschichteten Lagerbock 30, in dessen Bohrung die Welle 27 eingelassen ist.

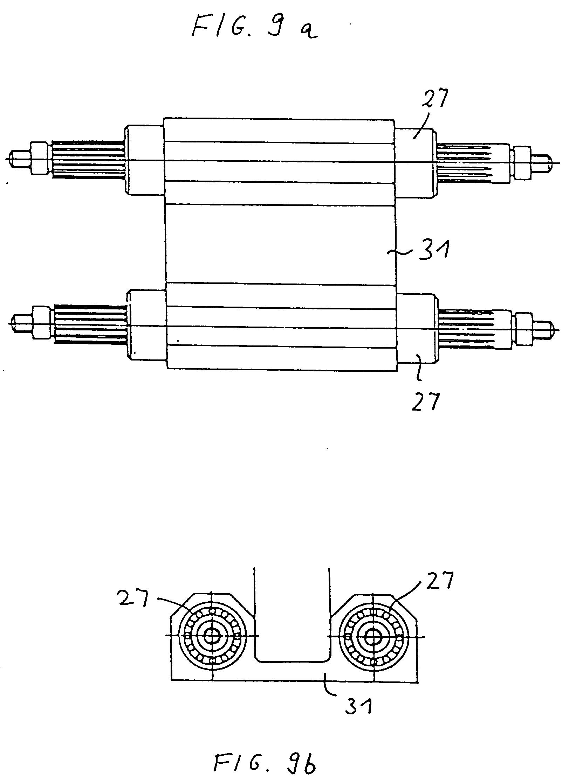

Fig. 9a und 9b zeigen eine entsprechende Anordnung eines Doppellagerbockes 31, dessen Träger zwei äußere Rohre 27 sind.

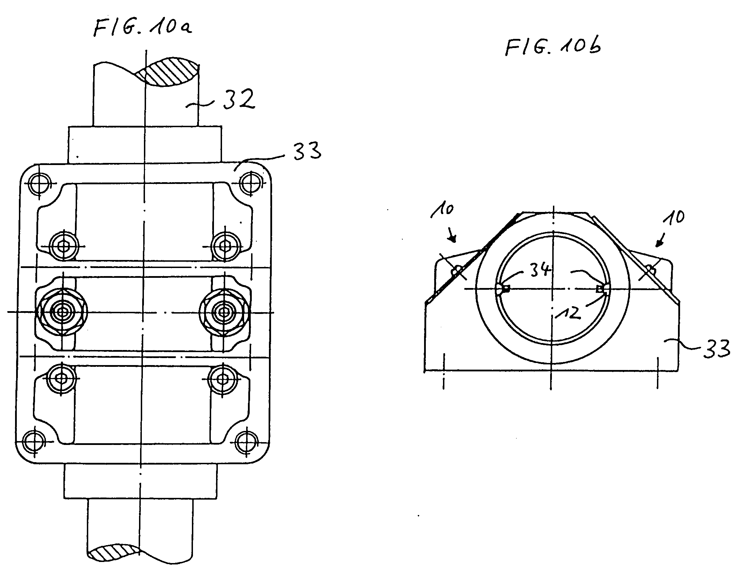

Fig. 10a und 10b zeigen wiederum eine Kugelführung für unbegrenzte Schiebewege, bei der auf einer runden Welle 32 laufend mindestens zwei Kugelumlaufschuhe 10 in einem Gehäuse 33 angeordnet sind, das beispielsweise aus einem Gußstahl bestehen kann. Die Welle 32 hat zwei gegenüberliegende gehärtete und geschliffene Laufrillen 34, in denen sich die Kugeln 12 abwälzen. Durch die Laufrillen 32 in den Kugelumlaufschuhen 10 kann ein Drehmoment vom Gehäuse 33 auf die Welle 32 oder umgekehrt übertragen werden. Das Gehäuse 33 und die Welle 32 bilden daher eine genaue Tischführung.

Nach der vorliegenden Erfindung sind das Gehäuse 13, einschließlich Steg 15, die Prismenschiene 17, der Tisch 22, die Rohrumlenkbögen 23, das äußere Rohr 27, die Welle 25, die Lagerböcke 30, 31 sowie die Wellen 27, 32 oder das Gehäuse 33 zumindest im jeweils der Außenatmosphäre frei zugänglichen Bereich pulverlackbeschichtet, wozu handelsübliche Pulverlackformulierungen verwendet werden können. Die Dicke der Pulverlackbeschichtung, ggf. auch Mehrlagenbeschichtungen, beträgt jeweils 50 bis 100 $\mu$m, als Material der Pulverlackbeschichtung dient ein Epoxy-Polyester- und/oder Polyurethan-Werkstoff, der mittels eines elektrostatischen Beschichtungsverfahrens auf dem geerdeten Werkstück aufgetragen worden ist. Die Pulverlackbeschichtung wurde bei Einbrenntemperaturen zwischen 160 und 200°C in einer Zeit von maximal 10 Minuten nach Erreichen der Objettemperatur eingebrannt. Die Dicke der aufgetragenen Pulverlackbeschichtung richtet sich nach der Zeit, über die das elektrische Feld angelegt wird.

Der Vorteil der verwendeten Pulverlacke beruht darauf, daß die verwendeten Ausgangswerkstoffe keine Lösungsmittel enthalten und somit keine Abfälle anfallen. Zur Beschichtung wird das Material über eine Sprühpistole aufgeladen und auf das Werkstück aufgebracht. Hierbei kann das Material auch an solchen Stellen aufgetragen werden, die nur schwer zugänglich sind, da das elektrische Feld das Werkstück vollständig umschließt. Etwa nicht auf das Werkstück aufgetragenes Material wird aus der Sprühkammer abgesaugt und kann erneut beim nächsten Versprühen verwendet werden. Das Pulverausgangsmaterial wird in einer geeigneten Mischung aus Harz, Härter, Pigment und Additiven, insbesondere Farbstoffen, in einer geeigneten homogenen Mischung angeliefert werden und ist im Handel erhältlich.

**Patentansprüche**

1. Kugelführung mit einem mindestens eine zum Abrollen der Kugeln (12) angepaßte nutförmige Laufrille (19) aufweisenden Basiskörper 17, 25, 32) und mit mindestens einem Kugelführungsgehäuse (13, 27),
**dadurch gekennzeichnet,**
daß der Basiskörper (17, 25, 32) und/oder das Kugelführungsgehäuse (13, 27) zumindest teilweise pulverlackbeschichtet ist.

2. Kugelführung nach Anspruch 1, dadurch gekennzeichnet, daß der Basiskörper eine Laufschiene (17) ist, deren mindestens eine lange schmale Seitenfläche (20) eine Laufrille (19) oder deren lange schmale Seitenflächen (20) jeweils eine Laufrille (19), vorzugsweise oberflächengehärtete Prismenlaufrille (19), aufweist oder aufweisen und daß zumindest die großflächigen Ober- und Unterseiten der Laufschiene (17) pulverlackbeschichtet sind.

3. Kugelführung nach Anspruch 1, dadurch gekennzeichnet, daß das Kugelführungsgehäuse als Kugelumlaufschuh (10) ausgebildet ist, der ein vorzugsweise einen Einstellexenter aufweisendes Innensegment (11), hierum oder hieran angeordnete Kugeln (12) sowie ein diese umschließendes Gehäuse (13) besitzt, das an einer Längsseite (14) oder beiden Längsseiten (14a, b) geöffnet ist, wobei die Kugeln (12) durch einen mit dem Gehäuse verbundenen Steg (15, 15a, 15b) am Herausfallen gehindert werden und das das Gehäuse (13) und der Steg (15, 15a, 15b) pulverbeschichtet sind.

4. Kugelführung nach Anspruch 2 oder 3, dadurch gekennzeichnet, daß ein vorzugsweise ebenfalls pulverlackbeschichteter Transfertisch (22) mit mindestens zwei Kugelumlauf schuhen (10) lösbar verbunden ist, deren Kugeln (12) in jeweils einer Laufrille (19) der pulverlackbeschichteten Laufschiene (17) abrollen.

5. Kugelführung nach Anspruch 1, dadurch gekennzeichnet, daß der Basiskörper eine pulverlackbeschichtete innere Welle (25) ist und daß die Kugeln (12) in einem Kugelkäfig (26) angeordnet sind und auf einer Laufrille oder Wellnut (28) der inneren Welle (25) und der Innenoberfläche eines äußeren pulverlackbeschichteten Rohres (27) als Kugelführungsgehäuse abwälzen.

6. Kugelführung nach Anspruch 5, dadurch gekennzeichnet, daß das äußere Rohr (27) als Träger eines pulverlackbeschichteten Bockes (30, 31) ausgebildet ist.

7. Kugelführung nach Anspruch 6, dadurch gekennzeichnet, daß der Bock als Einfach- (30), Doppel- (31) oder Mehrfachbock mit mindestens einem äußeren Rohr (27) verbunden ist.

8. Kugelführung nach einem der Ansprüche 1 bis 7, dadurch gekennzeichnet, daß mindestens an einer Seite des Kugelführungsgehäuses (13, 27) ein Abstreifer vorgesehen ist, der zwecks Reinigung in die Laufrille (19) gleitfähig verschiebbar eingreift, wobei vorzugsweise auch der oder die Abstreifer pulverlackbeschichtet sind.

9. Kugelführung nach einem der Ansprüche 1 bis 8, dadurch gekennzeichnet, daß der Pulverlack ein vorzugsweise kratz- und schlagfestes Duroplast auf der Basis Epoxid-, Polyester-, Polyurethan- und Acrylatharz ist.

10. Kugelführung nach Anspruch 9, dadurch gekennzeichnet, daß der Pulverlack ein Epoxy, Polyester oder Polyurethan ist, der mittels eines elektrostatischen Beschichtens auf dem geerdeten Werkstück aufgetragen worden ist.

11. Kugelführung nach Anspruch 9 oder 10, dadurch gekennzeichnet, daß die Pulverlackbeschichtung bei Temperaturen zwischen 160°C und 220°C, vorzugsweise mit einer Dicke zwischen 30 bis 300 $\mu$m, weiterhin vorzugsweise zwischen 50 und 100 $\mu$m aufgetragen und eingebrannt ist.

12. Kugelführung nach einem der Ansprüche 9 bis 11, dadurch gekennzeichnet, daß die Pulverlackbeschichtung in einer Zeit von maximal 10 Minuten nach Erreichen der Objekttemperatur von 160 bis 220°C eingebrannt worden ist.

FIG. 1 a

13

12

16

10

13

16

15

12

11

FIG. 1b

14

10

17 17a

12

17b

16

FIG. 1c

FIG. 2

20

17

21

21

20

a

20  19

17

17b  17a

b

FIG. 3

8

FIG. 4a

FIG. 5b

FIG. 5a

FIG. 6

FIG. 7

FIG. 8 a

FIG. 86

FIG. 9 a

27

31

27

27 27

31

FIG. 9b

FIG. 10b

FIG. 10a

Europäisches
Patentamt

**EUROPÄISCHER RECHERCHENBERICHT**

Nummer der Anmeldung

EP    92 10 5773
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | WO-A-8 203 190 (RESICOAT)<br><br>* Seite 3 *<br>--- | 1,9,10,<br>11,12 | F16C29/04<br>F16C29/06<br>F16C29/00 |
| A | PATENT ABSTRACTS OF JAPAN<br>vol. 13, no. 577 (M-910)(3925) 20. Dezember 1989<br>& JP-A-1 242 823 ( YOBEA RULON KOGYO ) 27. September 1989<br>* Zusammenfassung *<br>--- | 1,9 | |
| A | WORLD PATENTS INDEX LATEST<br>Section Ch, Week 9109,<br>Derwent Publications Ltd., London, GB;<br>Class M, AN 91-058676<br>& DD-A-282 958 (FORSCH WERKZ MARX) 26. September 1990<br>* Zusammenfassung *<br>--- | 1,2 | |
| A | DE-A-2 656 822 (SPÖLZL)<br>* Seite 23; Abbildung 15 *<br>--- | 1 | |
| A | PATENT ABSTRACTS OF JAPAN<br>vol. 15, no. 010 (M-1068)10. Januar 1991<br>& JP-A-2 261 924 ( NIPPON SEIKO ) 24. Oktober 1990<br>* Zusammenfassung *<br>--- | 1 | **RECHERCHIERTE SACHGEBIETE (Int. Cl.5 )**<br><br>F16C |
| A | EP-A-0 349 918 (STORZ)<br>* Spalte 3, Zeile 55 - Spalte 4, Zeile 28 *<br>--- | 1,9 | |
| A | PATENT ABSTRACTS OF JAPAN<br>vol. 6, no. 261 (C-141)21. Dezember 1982<br>& JP-A-57 153 767 ( NTN TOYO BEARING ) 22. September 1982<br>* Zusammenfassung *<br>--- | 1,9,10 | |
| A | EP-A-0 391 072 (INA)<br>* das ganze Dokument *<br>--- | 1 | |
| A | EP-A-0 218 836 (HONDSBERG) | | |

Der vorliegende Recherchenbericht wurde für alle Patentansprüche erstellt

| Recherchenort | Abschlußdatum der Recherche | Prüfer |
|---|---|---|
| DEN HAAG | 14 JULI 1992 | ORTHLIEB C.H.E. |

Europäisches
Patentamt

**EUROPÄISCHER RECHERCHENBERICHT**

Nummer der Anmeldung

EP    92 10 5773
Seite 2

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
| | --- | | |
| A | US-A-4 005 913 (THOMSON) | | |
| | ----- | | |
| | | | RECHERCHIERTE SACHGEBIETE (Int. Cl.5 ) |

Der vorliegende Recherchenbericht wurde für alle Patentansprüche erstellt

| Recherchenort | Abschlußdatum der Recherche | Prüfer |
|---|---|---|
| DEN HAAG | 14 JULI 1992 | ORTHLIEB C.H.E. |

EPO FORM 1503 03.82 (P0403)